# EUROPEAN PATENT APPLICATION

(11) **EP 1 337 124 A2**
(43) Date of publication of application: **20.08.2003**
(21) Application number: 03003404.5
(22) Date of filing: 14.02.2003
(51) Int. Cl.: H04Q 7/38, H04L 12/56

(54) **Context relocation method**

(30) Priority: 16.02.2002 KR 2002008342
(71) Applicant: LG ELECTRONICS INC., Seoul (KR)
(72) Inventor: Yi, Seung-June, Gangnam-Ku, Seoul (KR); Yeo, Woon-Young, Gunpo, Gyeonggi-Do (KR); Lee, So-Young, Gunpo, Gyeonggi-Do (KR)
(74) Representative: TER MEER STEINMEISTER & PARTNER GbR

(57) **Abstract**

A context relocation method used for header compression when seamless SRNS relocation is performed in an asynchronous IMT-2000 system transmits respective SN field values of compressor context and decompressor context together with SSR information from a source RNC or a target RNC to a UE when an SRNC, which manages dedicated radio resource assigned to a user equipment, performs SSR, and therefore, transmission efficiency can be improved as well as the UE and the target RNC which became the SRNC after SSR can be synchronized with the contexts of each other after the relocation..

## Description

### BACKGROUND OF THE INVENTION

### 1. Field of the Invention

The present invention relates to a context relocation method used in a header compression method, and particularly, to a context relocation method used in RFC 3095 header compression when seamless SRNS is relocated in an asynchronous IMT-2000 system.

### 2. Description of the Background Art

A universal mobile telecommunications system (UMTS) is a third generation mobile communication system that has evolved from a standard known as Global System for Mobile communications (GSM). This standard is a European standard which aims to provide an improved mobile communication service based on a GSM core network and wideband code division multiple access (W-CDMA) technology. In December, 1998, the ETSI of Europe, the ARIB/TTC of Japan, the T1 of the United States, and the TTA of Korea formed a Third Generation Partnership Project (3GPP) for the purpose of creating the specification for standardizing the UMTS.

The work towards standardizing the UMTS performed by the 3GPP has resulted in the formation of five technical specification groups (TSG), each of which is directed to forming network elements having independent operations. More specifically, each TSG develops, approves, and manages a standard specification in a related region. Among them, a radio access network (RAN) group (TSG-RAN) develops a specification for the function, items desired, and interface of a UMTS terrestrial radio access network (UTRAN), which is a new RAN for supporting a W-CDMA access technology in the UMTS.

The TSG-RAN group includes a plenary group and four working groups. Working group 1 (WG1) develops a specification for a physical layer (a first layer). Working group 2 (WG2) specifies the functions of a data link layer (a second layer) and a network layer (a third layer). Working group 3 (WG3) defines a specification for an interface among a base station in the UTRAN, a radio network controller (RNC), and a core network. Finally, Working group 4 (WG4) discusses requirements desired for evaluation of radio link performance and items desired for radio resource management.

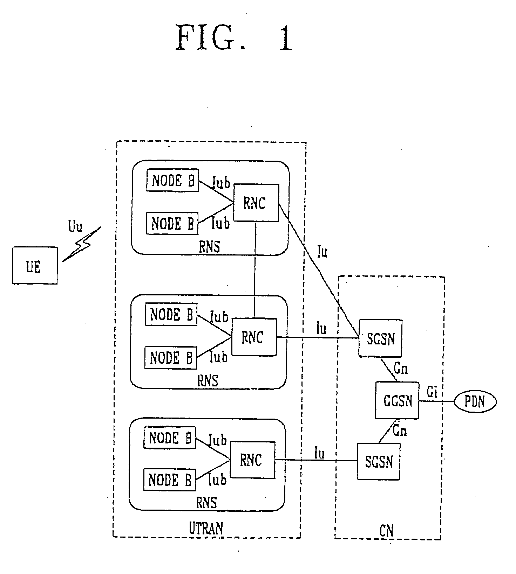

Figure 1 shows a structure of a 3GPP UTRAN. This UTRAN 110 includes one or more radio network sub-systems (RNS) 120 and 130. Each RNS 120 and 130 includes a RNC 121 and 131 and one or more Nodes B 122 and 123 and 132 and 133 (e.g., a base station) managed by the RNCs. RNCs 121 and 131 are connected to a mobile switching center (MSC) 141 which performs circuit switched communications with the GSM network. The RNCs are also connected to a serving general packet radio service support node (SGSN) 142 which performs packet switched communications with a general packet radio service (GPRS) network.

Nodes B are managed by the RNCs, receive information sent by the physical layer of a terminal 150 (e.g., mobile station, user equipment and/or subscriber unit) through an uplink, and transmit data to a terminal 150 through a downlink. Nodes B, thus, operate as access points of the UTRAN for terminal 150.

The RNCs perform functions which include assigning and managing radio resources. An RNC that directly manages a Node B is referred to as a control RNC (CRNC). The CRNC manages common radio resources. A serving RNC (SRNC), on the other hand, manages dedicated radio resources assigned to the respective terminals. The CRNC can be the same as the SRNC. However, when the terminal deviates from the region of the SRNC and moves to the region of another RNC, the CRNC can be different from the SRNC. Because the physical positions of various elements in the UMTS network can vary, an interface for connecting the elements is necessary. UE and Node B are connected to each other by an Uu interface. Nodes B and the RNCs are connected to each other by an lub interface. Two RNCs are connected to each other by an lur interface. An interface between the RNC and a core network is referred to as lu.

In addition, RNS including the SRNC of a certain UE among the RNSs is called as a serving RNS (SRNS).

The SGSN routes information transmitted from the UTRAN, and the GGSN performs as a gateway which trunks the information in case that destination of the information is not the present CN, but another network.

The packet domain network (PDN) is a backbone network of the PS domain, and supports the connection with other networks in the PS domain.

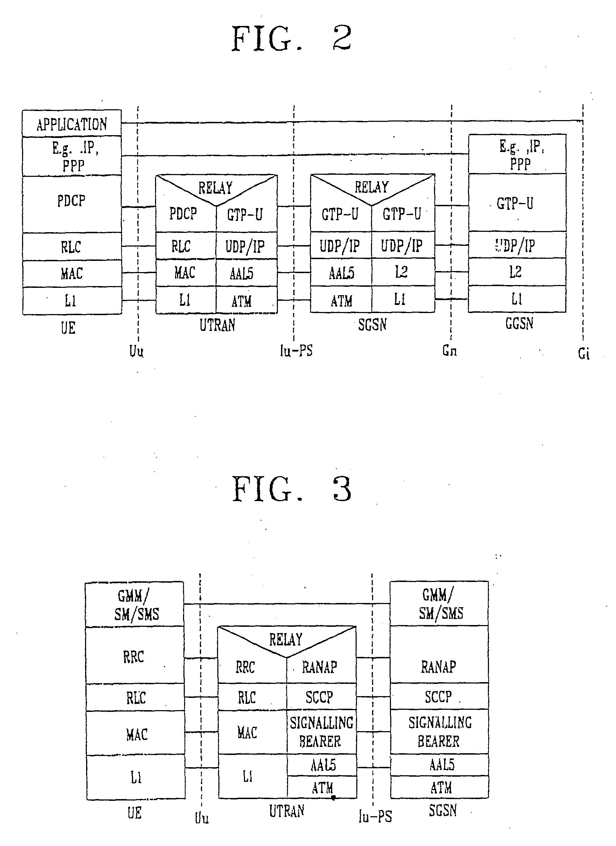

Figures 2 and 3 show the configuration of the PS domain shown in Figure 1 in hierarchical structure, Figure 2 is a view showing a user plane (U-plane) for transmitting user data, and Figure 3 is a view showing a control plane (C-plane) for transmitting a control signal.

As shown in Figure 2, the U-plane comprises a packet data convergence protocol layer (hereinafter, referred to as PDCP), a radio link control layer (hereinafter, referred to as RLC), a medium access control layer (hereinafter, referred to as MAC) and a physical layer as a first layer (hereinafter, referred to as L1) in the Uu interface as a reference.

As shown in Figure 3, the C-plane comprises a radio resource control layer (hereinafter, referred to as RRC), an RLC layer, a MAC layer and an L1 layer in the Uu interface as a reference.

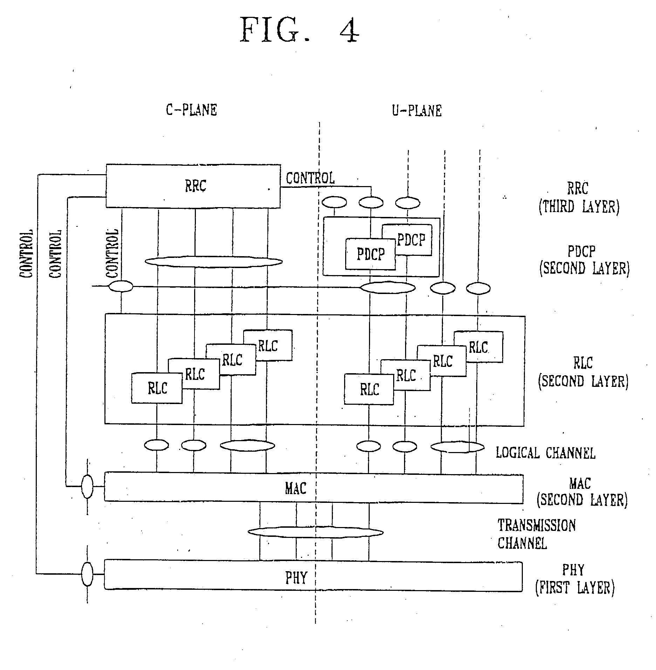

Figure 4 shows a detailed radio access interface protocol layers of the Uu interface shown in Figures 2 and 3. The radio access interface protocol is horizontally formed of a physical layer (PHY), a data link layer, and a network layer and is vertically divided into a control plane for transmitting a control information and a user plane for transmitting data information. The user plane is a region to which traffic information of a user such as voice or an IP packet is transmitted. The control plane is a region to which control information such as an interface of a network or maintenance and management of a call is transmitted.

In Figure 2, protocol layers can be divided into a first layer (L1), a second layer (L2), and a third layer (L3) based on three lower layers of an open system interconnection (OSI) standard model well known in a communication system.

The first layer (L1) operates as a physical layer (PHY) for a radio interface and is connected to an upper medium access control (MAC) layer through one or more transport channels. The physical layer transmits data delivered to the physical layer (PHY) through a transport channel to a receiver using various coding and modulating methods suitable for radio circumstances. The transport channel between the physical layer (PHY) and the MAC layer is divided into a dedicated transport channel and a common transport channel based on whether it is exclusively used by a single terminal or shared by several terminals.

The second layer L2 operates as a data link layer and lets various terminals share the radio resources of a W-CDMA network. The second layer L2 is divided into the MAC layer, a radio link control (RLC) layer, a packet data convergence protocol (PDCP) layer, and a broadcast/multicast control (BMC) layer.

The MAC layer delivers data through an appropriate mapping relationship between a logical channel and a transport channel. The logical channels connect an upper layer to the MAC layer. Various logical channels are provided according to the kind of transmitted information. In general, when information of the control plane is transmitted, a control channel is used. When information of the user plane is transmitted, a traffic channel is used. The MAC layer is divided two sub-layers according to performed functions. The two sub-layers are a MAC-d sub-layer that is positioned in the SRNC and manages the dedicated transport channel and a MAC-c/sh sub-layer that is positioned in the CRNC and manages the common transport channel.

The RLC layer forms an appropriate RLC protocol data unit (PDU) suitable for transmission by the segmentation and concatenation functions of an RLC service data unit (SDU) received from an upper layer. The RLC layer also performs an automatic repeat request (ARQ) function by which an RLC PDU lost during transmission is re-transmitted. The RLC layer operates in three modes, a transparent mode (TM), an unacknowledged mode (UM), and an acknowledged mode (AM). The mode selected depends upon the method used to process the RLC SDU received from the upper layer. An RLC buffer stores the RLC SDUs or the RLC PDUs received from the upper layer exists in the RLC layer.

The packet data convergence protocol (PDCP) layer is an upper layer of the RLC layer which allows data items to be transmitted through a network protocol such as the IPv4 or the IPv6. A header compression technique for compressing and transmitting the header information in a packet can be used for effective transmission of the IP packet.

The broadcast/multicast control (BMC) layer allows a message to be transmitted from a cell broadcast center (CBC) through the radio interface. The main function of the BMC layer is scheduling and transmitting a cell broadcast message to a terminal. In general, data is transmitted through the RLC layer operating in the unacknowledged mode.

The PDCP layer and the BMC layer are connected to the SGSN because a packet switching method is used, and are located only in the user plane because they transmit only user data. Unlike the PDCP layer and the BMC layer, the RLC layer can be included in the user plane and the control plane according to a layer connected to the upper layer,. When the RLC layer belongs to the control plane, data is received from a radio resource control (RRC) layer. In the other cases, the RLC layer belongs to the user plane. In general, the transmission service of user data provided from the user plane to the upper layer by the second layer (L2) is referred to as a radio bearer (RB). The transmission service of control information provided from the control plane to the upper layer by the second layer (L2) is referred to as a signaling radio bearer (SRB). As shown in Figure 2, a plurality of entities can exist in the RLC and PDCP layers. This is because a terminal has a plurality of RBs, and one or two RLC entities and only one PDCP entity are generally used for one RB. The entities of the RLC layer and the PDCP layer can perform an independent function in each layer.

The RRC layer positioned in the lowest portion of the third layer (L3) is defined only in the control plane and controls the logical channels, the transport channels, and the physical channels in relation to the setup, the reconfiguration, and the release of the RBs. At this time, setting up the RB means processes of stipulating the characteristics of a protocol layer and a channel, which are required for providing a specific service, and setting the respective detailed parameters and operation methods. It is possible to transmit control messages received from the upper layer through a RRC message.

ROHC in the IP header compression technologies used in the PDCP layer will be described in detail as follows.

The ROHC is used to reduce the header information in a Real-time Transport Protocol(RTP)/User Datagram Protocol(UDP)/Internet Protocol(IP) packet, and the RTP protocol is used to compensate a problem that the real-time property of the service can not be ensured when the real-time traffic such as VoIP (Voice over IP) or the streaming service is transmitted to the UDP/IP packet.

Generally, full header size of uncompressed RTP/UDP/IP packet is 40 octet in case of IPv4, and 60 octet in case of IPv6. In addition, size of a payload is usually 15 ∼ 20 octet, although it is different from voice coding method and size of a frame. Therefore, transport efficiency of the information can be improved by reducing the header size of the packet using the ROHC.

The ROHC is based on a fact that header field values of respective packet data in continuous packet data included in one packet stream and the header field which is changed continuously should have a constant pattern. That is, the ROHC does not transport the full header field, but transports the changing header field. The header size of the ROHC is usually 1 ∼ 3 octet, although it is different from the kinds of compressed header packet.

The ROHC will be described in more detail as follows.

A compressor transports full header packet, and after that, initializes a context based on the full header packet. At that time, the context is a set of fields which become the reference of compressing the packet.

When the context is initialized, the compressed header packet is divided into a compressed header packet which updates the context, and a compressed header packet which does not update the context.

The compressor transports a plurality of compressed header packets which updates the context after initializing the context, and then, transports the compressed header packet which does not update the context.

A decompressor receives the full header packet transported from the compressor to initialize the context. At that time, the context of the decompressor is a set of fields which become the reference for decompressing the compressed packet.

The decompressor decides whether or not the compressed header packet transported from the compressor updates the context after initializing the context. In case that the decompressor receives the compressed header packet which updates the context, the decompressor checks integrity of the packet and transports the decompressed packet to the higher layer only when the packet is in the integrity state. However, in case that the decompressor receives the compressed header packet which does not update the context, the decompressor decompresses the compressed header without checking the integrity and transports the decompressed packet to the higher layer.

Since there is not a large difference of field value between the continuous compressed header packets in the packet stream, the ROHC transports as much as the least significant bits (LSB) among the present field values after setting a reference value instead of transporting the entire field values.

At that time, in case that the compressed header packet which updates the context is transported continuously, the LSB of the present field value is based on the entire field values of the context which is updated by the previous compressed header packet. However, in case of the compressed header packet which does not update the context, LSB among the entire field values is transported based on the value of latest updated context. In addition, the decompressor receiving the LSB value decompresses original field value based on the recent reference value.

Since the mobile communication system should support the mobility of respective UE during the transmission/reception of the packet data is proceeded, SRNS relocation, that is, change of SRNS including a certain UE is generated.

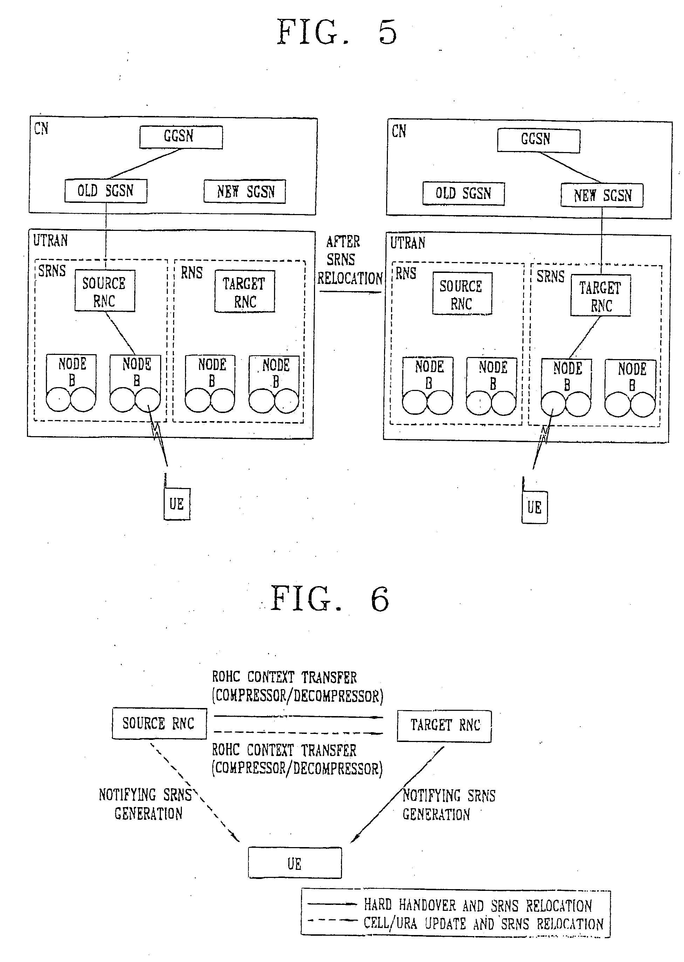

Figure 5 is a view showing a process of SRNS relocation according to the conventional art, and the SRNS relocation is a process of changing SRNC from the source RNC to a target RNC in order to set the lu interface between the UE and the CN to be the shortest way in case that the UE performs handover between RNSs.

The SRNS relocation comprises lossless SRNS relocation and seamless SRNS relocation (hereinafter, referred to as SSR), and the SSR mode is used since the ROHC is applied to the real-time traffic.

The SSR is a handover method providing continuous service as followings. The packet data is transmitted/received between the UE and source RNC in case that the source RNC is the SRNC, and when the target RNC becomes the SRNC, the packet data is transmitted/received between the UE and target RNC.

There are two methods for the target RNC to initialize the context during the SSR is performed.

First, when the target RNC becomes the SRNC, a new context is initialized between the UE and the target RNC by transmitting/receiving the full header packet between the UE and the target RNC. In addition, second method is that the source RNC transmits the existing compressor context and the decompressor context to the target RNC through the lur interface, the target RNC initializes the compressor context and the decompressor context using the contexts transmitted from the source RNC, and the UE uses the existing compressor context and the decompressor context.

Figure 6 is a view showing a context relocation method according to the conventional art, and the method is for transmitting existing the compressor context and the decompressor context from the source RNC to the target RNC.

As shown in Figure 6, in the SRNS relocation, the source RNC takes a snap shot of compressor and decompressor ROHC contexts used before, and transmits them to the target RNC. At that time, the target RNC initializes the compressor context and the decompressor context using the transmitted contexts through the context relocation, however, the target RNC does not transmit/receive the packet data with the UE before it becomes the SRNC. After performing the SRNS relocation, the compressor and the decompressor of the target RNC compress or decompress the packet based on the initialized context.

In case of hard handover and SRNS relocation, the source RNC informs the UE of generation of the SRNS relocation, and in case of Cell/URA update and SRNS relocation, the target RNC informs the UE of the SRNS relocation.

That is, the conventional context relocation method not only reduces the radio resource efficiently by using ROHC technology in PDCP layer of the UMTS system, but initializes the transmitted compressor context and the decompressor context in the target RNC serving the continuous mobile communications during the SSR.

If the compressed header packet which does not update the context is transmitted/received during the SSR, the context is not updated between the source RNC and the UE, and therefore, the context of UE and the context of the SRNC are still synchronized when the target RNC becomes the SRNC.

However, if the compressed header packet which updates the context is transmitted/received between the source RNC and the UE during the SSR, the contexts of the source RNC and of the UE are updated respectively. Since the target RNC does not transmit/receive the packet data before the target RNC becomes the SRNC, the context of the target RNC has no change.. Therefore, when the target RNC becomes the SRNC after completing the SSR, the context of the UE and the context of the target RNC initialized by the context relocation are now out-of-synchronized.

The compressors of the UE and the target RNC respectively transmit the compressed header packet based on the existing compressor context as not knowing that the synchronization of the contexts is lost after the SSR, and, therefore, the decompressors of the UE and the target RNC respectively can not decompress the contexts correctly because the decompressors decompress the compressed header packet based on the existing decompressor contexts.

The compressed header packet can not be correctly decompressed before the compressor context and the decompressor context of the UE and the target RNC are synchronized respectively, and thereby, the packet data is continuously lost. That is, loss of the packet data is caused by the SSR.

In the conventional ROHC technology, the decompressor transmits negative acknowledgement (NACK) to the compressor when the several successive packets have failed to be decompressed correctly . Therefore, a lot of packet data are lost before the contexts of the UE and the target RNC is synchronized.

Because the NACK includes the recent reference value decompressed successfully , the compressor context is able to be synchronized with the decompressor context by generating the compressed header packet based on the reference value included in the NACK.

In the conventional context relocation method as described above, the context update is generated due to the data retransmission from the RLC or transmission of context update packet data during the SRNS relocation, and therefore, the synchronization between the contexts of the UE and of the target RNC is not maintained after the SRNS relocation.

Also, according to the conventional context relocation method, the compressed header packet can not be decompressed correctly before the synchronization of the compressor contexts and the decompressor contexts of the UE and the target RNC is obtained, and therefore, the loss of packet data is generated continuously.

### SUMMARY OF THE INVENTION

Therefore, an object of the present invention is to provide a context relocation method which is able to decompress compressed header packet correctly after SRNS relocation, by transmitting information which maintains synchronization between a user equipment (UE) and a target radio network controller (RNC) in SRNS relocation.

To achieve the object of the present invention, as embodied and broadly described herein, there is provided a context relocation method characterized in that a source RNC or a target RNC transmits SSR information, SN field values of respective compressor context and decompressor context to UE when an SRNC performs seamless SRNS relocation (SSR).

There is provided a context relocation method comprising: a step of transmitting compressor context and decompressor context from the source RNC to the target RNC; a step of transmitting SSR information and SN field values of compressor context and decompressor context from the source RNC to a UE; and a step of updating respectively SN field values of the compressor context and the decompressor context stored in the UE.

In addition, there is provided a context relocation method comprising: a step of transmitting compressor context and decompressor context from the source RNC to the target RNC; a step of transmitting SSR information and SN field values of compressor context and decompressor context from the target RNC to a UE; and a step of updating respectively SN field values of the compressor context and the decompressor context stored in the UE.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram showing a configuration of a general packet service domain suggested by 3GPP;
Figure 2 is a view showing a user plane for transmitting user data;
Figure 3 is a view showing a control plane for transmitting a control signal;
Figure 4 is a view showing a detailed layers of a radio interface protocol between a UE and a UTRAN based on 3GPP radio connection network specification;
Figure 5 is a view showing an SRNS relocation processes according to the conventional art;
Figure 6 is a flow chart showing a context relocation method according to the conventional art;
Figure 7 is a flow chart showing a context relocation method according to the present invention; and
Figures 8A and 8B are flow charts showing operational processes of the context relocation method applied to a system according to the present invention.

### DETAILED DESCRIPTION OF THE PREFERRED EMBODIMENTS

Reference will now be made in detail to the preferred embodiments of the present invention, examples of which are illustrated in the accompanying drawings.

A context relocation method according to the present invention is able to control contexts between target radio network controller (RNC) which becomes SRNS after seamless SRNS relocation (SSR) is completed and a user equipment (UE) to be synchronized by transmitting information which makes respective compressor context and decompressor context of the target RNC and the UE be synchronized from the source RNC or the target RNC to the UE during SSR is performed. At that time, the information maintaining the synchronization in a robust header compression (ROHC) is sequence number (SN) of real-time transport protocol (RTP).

The RTP is a communication protocol for transmitting/receiving voice or performing a telephone speech as real-time, and is performed between the UEs without depending on the communication network equipment such as a router. Also, the RTP is used as a higher communication protocol of a user datagram protocol (UDP) generally.

The SN is a value which increases whenever the RTP packet is transmitted, and a field by which other values can be analogized in a context. During the SSR is performed, the source RNC or the target RNC informs the UE whether or not the SSR is performed, and transmits respective SN field values of compressor context and the decompressor context used in the context relocation and performing of the SSR to the UE.

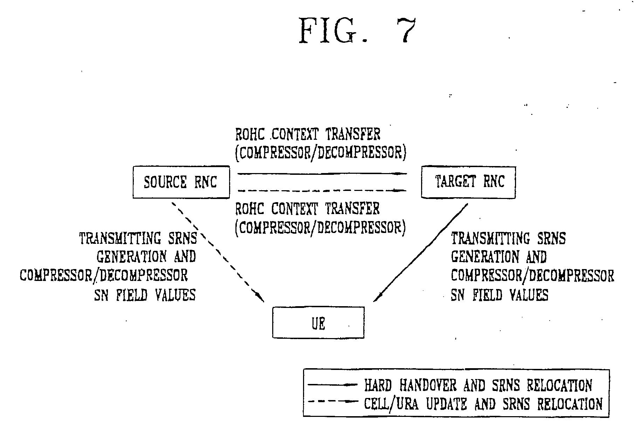

Figure 7 is a view showing the context relocation method according to the present invention, that is, the method for informs SN field values of respective compressor context and decompressor context used in the context relocation to the UE.

The SSR is generated with hard handover which sets a new connection after disconnecting existing connection when the SRNC including the corresponding UE is changed due to the movement of the UE, or generated with a cell/URA updating which sets a new connection before the existing connection is disconnected.

In the hard handover method, the context update is performed by transmitting ROHC compressor context and decompressor context from the source RNC to the target RNC through lur interface, after informs the UE of SSR generation by the source RNC.

In the cell/URA (UTRAN registration area) updating method, the source RNC transmits ROHC compressor context and decompressor context to the target RNC through the lur interface to perform the context update, and after that, the target RNC notifies the UE of SSR generation when the target RNC becomes the SRNC.

In the present invention, when the source RNC or the target RNC notifies the UE of the SSR generation, the SN field values of respective compressor context and the decompressor context is also transmitted as well as the compressor and decompressor contexts.

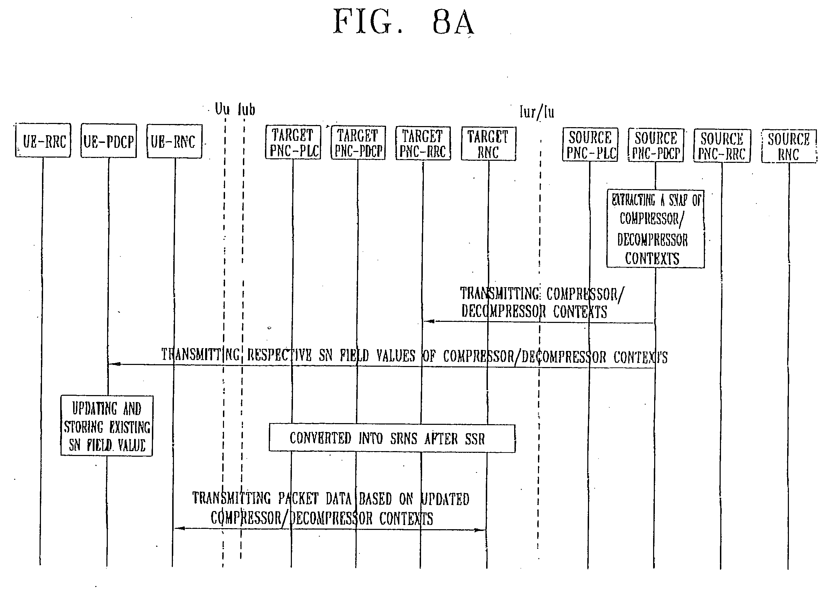

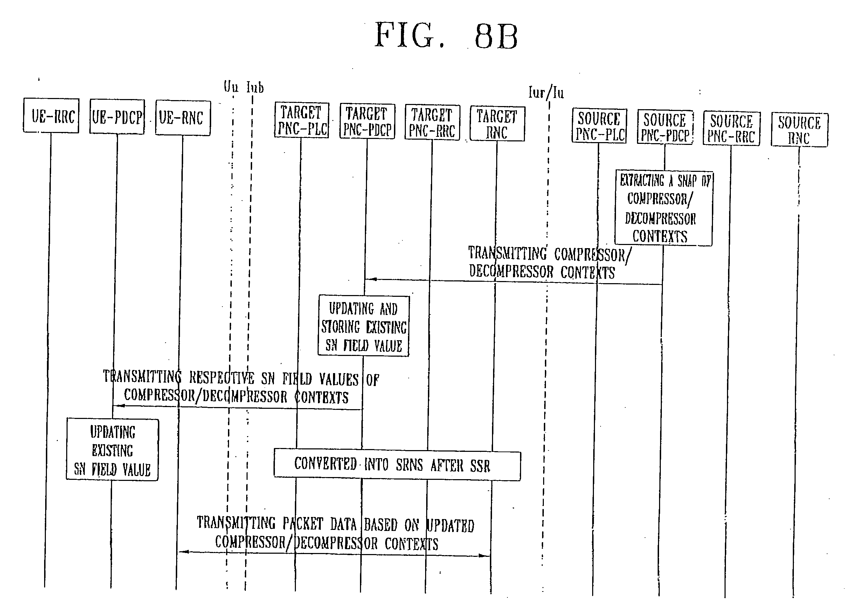

Figures 8A and 8B are views showing operational processes of the context relocation method according to the present invention applied to a system, Figure 8A shows the hard handover method, and Figure 8B shows the cell/URA updating method.

As shown in Figure 8A, the source RNC takes a snap shot of the compressor context and the decompressor context and delivers it to a packet data convergence protocol (PDCP) layer, and the compressor context and the decompressor context delivered to the PDCP layer are transmitted from the source RNC to the target RNC. At that time, the snap shot of the compressor context and the decompressor context is taken on ROHC layer existing in the PDCP layer.

The respective SN field values of the compressor context and of the decompressor context and the information about the SSR performance are transmitted from the source RNC to the UE using a radio resource control (RRC) message, and received SN field values are stored in the PDCP layer of the UE.

The respective SN field values of the compressor context and of the decompressor context stored in the PDCP layer of the UE update the existing SN field values of the compressor and decompressor contexts, and the packet data is compressed and decompressed based on the updated compressor context and the decompressor context when the target RNC becomes SRNC after the SSR.

Also, as shown in Figure 8B, information of the compressor context and the decompressor context formed on the target RNC which maintains synchronization with the UE context is notified to the UE, and thereby, the context is updated based on the information received by the UE to maintain the synchronization when the target RNC becomes the SRNC after the SSR is completed.

The source RNC takes the snap shot of the compressor context and the decompressor context and delivers it to the PDCP layer, and the delivered compressor context and decompressor context are transmitted from the source RNC to the target RNC.

In addition, respective SN field values of the compressor context and the decompressor context and information for the SSR performance are transmitted from the target RNC to the UE using the RRC message, and transmitted respective SN field values are stored in the PDCP layer of the UE.

The respective SN field values of the compressor context and the decompressor context stored in the PDCP layer of the UE update the existing SN field values of compressor context and decompressor context, and the packet data is compressed and decompressed based on the updated compressor context and the decompressor context when the target RNC becomes the SRNC after the SSRis completed.

As described above, according to the context relocation method of the present invention, the source RNC or the target RNC notifies the UE of the respective SN field values of the compressor context and of the decompressor context used in the context relocation together with the SSR information, and thereby, the UE is able to synchronize the contexts by transmitting/receiving compressed header packet with the target RNC based on the received SN field values.

Also, according to the context relocation method of the present invention, the UE and the target RNC decompress the compressed header packet correctly, and therefore, loss of packet data is reduced and the compression/decompression efficiency is improved.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A context relocation method **characterized in that** a source radio network controller (RNC) or a target RNC transmits seamless SRNS relocation (SSR) information and sequence number (SN) field values of compressor context and decompressor context to a user equipment (UE) when a serving radio network controller (SRNC), which manages dedicated radio resource assigned to a user equipment, performs seamless SRNS relocation (SSR).

2. The method of claim 1, wherein the source RNC includes a header compressing layer which takes a snap shot of the compressor context and the decompressor context used in the SSR, and after that, delivers it to a packet data convergence protocol (PDCP) layer.

3. The method of claim 2, wherein the PDCP layer of the source RNC transmits the snap shot of the compressor context and of the decompressor context to a PDCP layer of the target RNC.

4. The method of claim 2, wherein the PDCP layer of the source RNC delivers respective SN fields of the compressor context and of the decompressor context to an RRC layer of the source RNC.

5. The method of claim 4, wherein the RRC layer of the source RNC transmits the respective SN fields of the compressor context and the decompressor context to the UE.

6. The method of claim 5, wherein the UE updates the existing SN field values of the compressor context and the decompressor context into received SN field values, and after that, compresses and decompresses packet data based on the updated compressor context and the decompressor context respectively.

7. A context relocation method comprising:
a step of transmitting compressor context and decompressor context from a source RNC to a target RNC;
a step of transmitting SSR information and respective SN field values of the compressor context and the decompressor context from the source RNC to a UE; and
a step of updating respective SN field values of the compressor context and the decompressor context stored in the UE.

8. The method of claim 7 further comprising:
a step of compressing and decompressing packet data based on the updated compressor context and the decompressor context respectively.

9. The method of claim 8, wherein the step of compressing/decompressing packet data compresses and decompresses the packet data based on the SN fields stored in the UE when the target RNC becomes SRNS after the SSR is completed.

10. The method of claim 7, wherein the step of transmitting the contexts to the target RNC comprises:
a step of taking a snap shot of the compressor context and the decompressor context and delivering it to the PDCP layer by the source RNC; and
a step of transmitting the compressor context and the decompressor context delivered to the PDCP layer in the source RNC to the target RNC.

11. The method of claim 10, wherein the snap shot is made by taking the compressor context and the decompressor context used in the context relocation in robust header compression (ROHC) layer of the source RNC.

12. The method of claim 7, wherein the SN field value is transmitted from the source RNC to the UE using a radio resource control (RRC) message.

13. The method of claim 7, wherein the UE delivers the received SN field values of the compressor context and of the decompressor context from the corresponding PDCP layer to the ROHC layer to update respective SN field values stored in the compressor context and in the decompressor context.

14. A context relocation method comprising:
a step of transmitting compressor context and decompressor context from a source RNC to a target RNC;
a step of transmitting SSR information and respective SN field values of the compressor context and the decompressor context from the target RNC to a UE; and
a step of updating respective SN field values of the compressor context and the decompressor context stored in the UE.

15. The method of claim 14 further comprising:
a step of compressing and decompressing packet data based on the updated compressor context and the decompressor context respectively.

16. The method of claim 15, wherein the step of compressing/decompressing packet data compresses and decompresses the packet data based on the SN fields stored in the UE when the target RNC becomes SRNS after the SSR is completed.

17. The method of claim 14, wherein the step of transmitting the contexts to the target RNC comprises:
a step of taking a snap shot of the compressor context and the decompressor context and delivering it to the PDCP layer by the source RNC; and
a step of transmitting the compressor context and the decompressor context delivered to the PDCP layer in the source RNC to the target RNC.

18. The method of claim 17, wherein the snap shot is made by taking the compressor context and the decompressor context used in the context relocation on an ROHC layer of the source RNC.

19. The method of claim 14, wherein the SN field value is transmitted from the source RNC to the UE using an RRC message.

20. The method of claim 14, wherein the UE delivers the received SN field values of the compressor context and of the decompressor context from the corresponding PDCP layer to the ROHC layer to update respective SN field values stored in the compressor context and in the decompressor context.
